# EUROPÄISCHE PATENTANMELDUNG

(11) **EP 2 677 194 A2**
(43) Veröffentlichungstag der Anmeldung: **25.12.2013**
(21) Anmeldenummer: 13168464.9
(22) Anmeldetag: 21.05.2013
(51) Int. Cl.: F16F 9/46

(54) **Verstellbare Dämpfventileinrichtung**

(30) Priorität: 21.06.2012 DE 102012210459
(71) Anmelder: ZF Friedrichshafen AG, 88038 Friedrichshafen (DE)
(72) Erfinder: Manger, Thomas, 97535 Wasserlosen (DE); Schmitt, Stefan, 97469 Gochsheim (DE); Zeissner, Bernd, 97332 Volkach (DE)

(57) **Zusammenfassung**

Verstellbare Dämpfventileinrichtung (1), umfassend ein verstellbares Dämpfventil (37), das in zwei Richtungen durchströmbar ist, wobei dem verstellbaren Dämpfventil (37) für jeweils eine Durchströmungsrichtung ein druckabhängiges Zusatzventil (91; 93) in Reihe zugeordnet ist, wobei jedes Zusatzventil (91; 93) mindestens einen separaten Durchtrittskanal (103;105) aufweist, dessen Austrittsseite von mindestens einer Ventilscheibe (107; 109) zumindest teilweise abgedeckt wird, wobei der Strömungsweg in Strömungsrichtung ausgehend vom verstellbaren Dämpfventil (37) durch das erste Zusatzventil (91) von einem kleineren Eintrittsdurchmesser (Dᵢ) auf einen größeren Austrittsdurchmesser (Dₐ) ausgeführt ist und die mindestens eine Ventilscheibe (107) eine randseitige Abhubbewegung ausführt, wobei der Strömungsweg durch das zweite Zusatzventil (93) in Strömungsrichtung zum verstellbaren Dämpfventil (37) von einem größeren Eintrittsdurchmesser (D₁) auf einen kleineren Austrittsdurchmesser (D₂) ausgeführt ist.

## Beschreibung

Die Erfindung betrifft eine verstellbare Dämpfventileinrichtung gemäß dem Oberbegriff von Patentanspruch 1.

Aus der DE 198 22 448 A1 ist eine verstellbare Dämpfventileinrichtung bekannt, die ein druckabhängiges Zusatzdämpfventil aufweist, das einem verstellbaren Hauptstufenventil in Reihe vorgeschaltet ist. Das Zusatzdämpfventil verfügt über einen Aufbau, wie er auch bei an sich bekannten Bodenventilen bekannt ist. Ein Dämpfventilkörper weist getrennt Durchtrittkanäle für beide Durchströmungsrichtungen auf, die an ihrer Austrittsseite jeweils von mindestens einer Ventilscheibe zumindest teilweise abgedeckt werden. Ein zentraler Befestigungsbolzen fixiert die Ventilscheiben ein ihren Innendurchmessern.

Das Hauptstufenventil verfügt über einen kleineren Durchmesser als der Abhubbereich des Zusatzventils. Der Strömungsweg zu einem Vorstufenventil wiederum ist sehr nahe an einer Mittelachse der Dämpfventileinrichtung ausgeführt, so dass das Dämpfmedium nach der Passage durch das Zusatzventil nach radial innen gelenkt wird, um möglichst direkt auf das Hauptstufen- und das Vorstufenventil zuzuströmen. Dazu verfügt ein Ventilgehäuse über ein entsprechendes Umlenkprofil.

Die Aufgabe der vorliegenden Erfindung besteht darin, den Strömungsweg zwischen dem Zusatzventil und dem verstellbaren Dämpfventil im Hinblick auf Strömungswiderstände zu optimieren.

Erfindungsgemäß wird die Aufgabe dadurch gelöst, dass der Strömungsweg in Strömungsrichtung ausgehend vom verstellbaren Dämpfventil durch das erste Zusatzventil von einem kleineren Eintrittsdurchmesser auf einen größeren Austrittsdurchmesser ausgeführt ist und die mindestens eine Ventilscheibe eine randseitige Abhubbewegung ausführt, wobei der Strömungsweg durch das zweite Zusatzventil in Strömungsrichtung zum verstellbaren Dämpfventil von einem größeren Eintrittsdurchmesser auf einen kleineren Austrittsdurchmesser ausgeführt ist.

Durch die Ausrichtung der Strömungswege erübrigt sich die Optimierung der Strömungskontur im Gehäuse der Dämpfventileinrichtung. Versuche haben gezeigt, dass durch die Erfindung Strömungsgeräusche innerhalb der Dämpfventileinrichtung minimiert werden.

In weiterer vorteilhafter Ausgestaltung ist die mindestens eine Ventilscheibe des zweiten Zusatzventils an ihrem Außendurchmesser zum Zusatzdämpfventilkörper zentriert. Dadurch wird der Bauraum für eine Abströmung nach radial innen vergrößert.

Dieselbe Grundidee wird dadurch verfolgt, indem mindestens eine Ventilscheibe des ersten Zusatzventils an ihrem Innendurchmesser zentriert ist. Auch an diesem Ventil steht das Zentrierelement der Abströmung aus dem Ventil nicht im Weg.

Des Weiteren ist vorgesehen, dass die Ventilscheiben des ersten und des zweiten Zusatzventils separat fixiert sind. Ein Befestigungsbolzen für das erste Zusatzventil kann entsprechend kurz ausgeführt werden. Der dadurch freigewordene Bauraum steht als Strömungsweg zur Verfügung.

In weiterer vorteilhafter Ausgestaltung weist der mindestens eine Durchtrittskanal des ersten Zusatzventils einen Radialabschnitt auf, der an einen Mittenanströmbereich angeschlossen ist. Der Radialabschnitt bewirkt den radialen Versatz innerhalb des Strömungswegs.

Gemäß einem vorteilhaften Unteranspruch weist das zweite Zusatzventil einen Ringdeckel auf, an dem sich mindestens eine Ventilfeder abstützt, die auf die mindestens eine Ventilscheibe des zweiten Ventils eine Vorspannkraft ausübt. Der Ringdeckel bietet die Möglichkeit eines großen Durchtrittsquerschnitts zwischen den Zusatzventilen und dem verstellbaren Dämpfventil.

Um die gelenkte Strömung weiter zu perfektionieren, ist vorgesehen, dass der mindestens einen Ventilscheibe des zweitens Ventils ein Winkelring beigeordnet ist, der eine Abstützfläche für die mindestens eine Ventilscheibe aufweist. Der Winkelring bietet einerseits eine Stützfläche für die Begrenzung der Öffnungsbewegung und für eine gezielte Abhubbewegung der mindestens einen Ventilscheibe.

So liegt der Winkelring im Bereich des Außendurchmessers der mindestens einen Ventilscheibe auf dieser auf. Dadurch hebt die Ventilscheibe zuerst am Innendurchmesser ab.

Der Winkelring wird radial von einem Steg des Ringdeckels zentriert. Auch diese Maßnahme dient dem Ziel eines uneingeschränkten Strömungswegs zu den Zusatzventilen.

Im Hinblick auf eine einfache Montage, insbesondere der Herstellung einer vormontierbaren und dadurch leicht prüfbaren Baueinheit bildet der Ringdeckel mit dem Zusatzventil eine Presspassung.

Anhand der folgenden Figurenbeschreibung soll die Erfindung näher erläutert werden.

Es zeigt:
- Fig. 1: Dämpfventileinrichtung mit Zusatzventilen
- Fig. 2: Rohrgehäuse mit Zusatzventilen im Detail
- Fig. 3: Alternativvariante des Zusatzventils

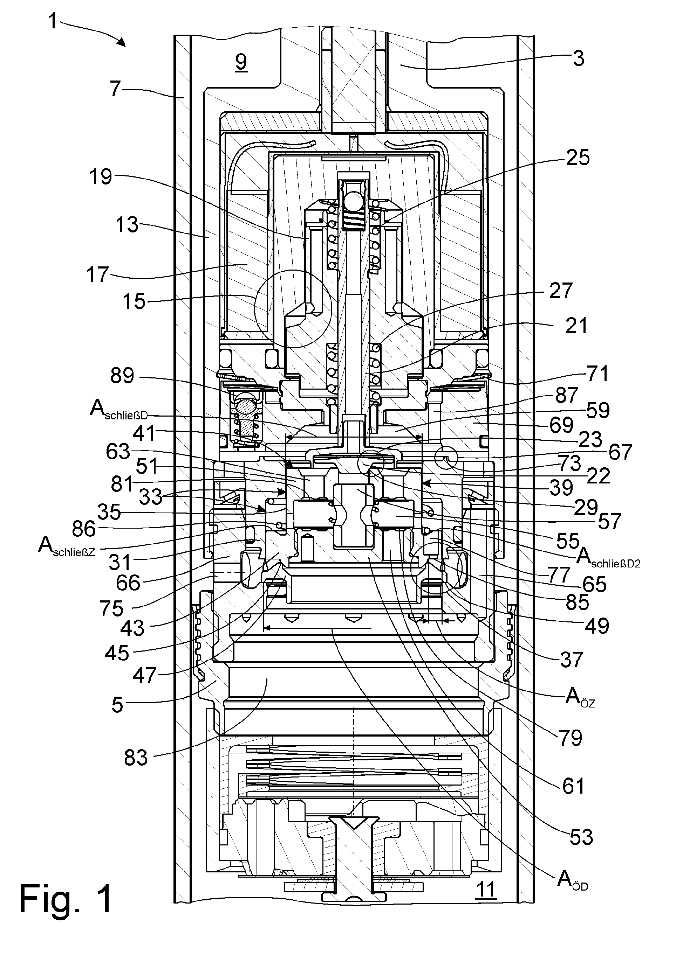

Die Figur 1 zeigt eine Dämpfventileinrichtung 1, die z. B. an einer Kolbenstange 3 eines nur ausschnittweise dargestellten Schwingungsdämpfers befestigt ist. Die Dämpfventileinrichtung 1 umfasst einen Kolben 5, der einen Zylinder 7 in einen kolbenstangenseitigen und einen kolbenstangenfernen Arbeitsraum 9; 11 unterteilt, die beide mit Dämpfmedium gefüllt sind. In diesem Ausführungsbeispiel ist die Dämpfventileinrichtung an der Kolbenstange 3 befestigt, jedoch ist die Erfindung nicht auf eine derartige Anordnung eingeschränkt.

In einem äußeren Gehäuse 13 ist ein Aktuator 15 beliebiger Bauform angeordnet, wobei in diesem Beispiel als Aktuator eine Magnetspule 17 dient, die auf einen axial beweglichen Anker 19 eine Kraft ausübt, die auf einen zweigeteilten Vorstufenventilkörper 21 eines Vorstufenventils 23 übertragen wird. Mindestens eine Ventilfeder, in dieser Variante kommen zwei entgegengesetzt wirksame Ventilfedern 25; 27 zur Anwendung, spannen den Vorstufenventilkörper 21 in Abhubrichtung bezogen auf eine Vorstufenventilfläche 29 des Vorstufenventils 23 vor. Der Aktuator 15 wirkt in Schließrichtung des Vorstufenventils 23. Die Kraft der mindestens einen Ventilfeder 25; 27 und die Kraft des Aktuators 15 bilden eine resultierende Kraft, die auf den Vorstufenventilkörper 21 in Abhubrichtung einwirkt.

In einem inneren Gehäuse 31 der Dämpfventileinrichtung 1 ist eine Stufenöffnung 33 ausgeführt, in der ein Ventilkörper 35 eines Hauptstufenventils 37 eine axiale Bewegung ausführen kann. Der Ventilkörper 35 verfügt über eine Führungshülse 39, deren Rückseite 41 eine vom Dämpfmedium druckbeaufschlagte Fläche A_{SchließD} bildet. Des Weiteren weist der Ventilkörper 35 einen radialen Absatz 43 auf, der in Richtung der Rückseite 41 eine zusätzliche druckbeaufschlagte Fläche A_{SchließD2} darstellt.

In einer Ruhelage der Kolbenstange 3, das heißt ohne Öffnungskraft, liegt der Ventilkörper 35 auf einer Ventilsitzfläche 45 eines axial beweglichen Ventilrings 47 auf, der an seiner in Richtung des kolbenstangenfernen Arbeitsraum 11 weisenden Seite auf einer gehäuseseitigen Ventilsitzfläche 49 aufliegt.

Der Ventilkörper 35 ist zweischalig aufgebaut. Ein äußerer Topf 51 bildet die Führungshülse 39 und den radialen Absatz 43. Eine innere Scheibe 53 begrenzt mit dem Topf 51 in einer Trennungsebene einen radialen Dämpfmediumströmungsweg 55 zwischen der zusätzlichen druckbeaufschlagten Fläche A_{SchließD2} und einem Steuerraum 57, dessen Abflussquerschnitt in Richtung eines Rückraums 59 vom Ventilkörper 21 bestimmt wird.

Die zusätzliche Fläche A_{SchließD2} des Ventilkörpers 35 ist über mindestens zwei Strömungswege mit Dämpfmedium beaufschlagbar. Ein erster Zuströmkanal 61 ist direkt im Ventilkörper 35 als axiale Durchgangsöffnung ausgeführt. Auf einem Teilabschnitt verläuft ein zweiter Zuströmkanal 63 innerhalb des Ventilkörpers 35 zwischen dem Rückraum 59 des Hauptstufenventils 37 und dem Dämpfmediumströmungsweg 55. Eine Strömungsanbindung 65 des Rückraums 59 zum kolbenstangenfernen Arbeitsraum 11 innerhalb einer Verbindungshülse 66 zwischen dem äußeren Gehäuse 13 und dem Kolben 5 wird von einem Notbetriebventil 67 gesteuert. Das Notbetriebventil 67 wird von einem Ventilring 69 gebildet, der gegen die Kraft mindestens einer Schließfeder 71 von dem Aktuator 15 von einer Notbetriebventilsitzfläche 73 abgehoben wird. Schon ein geringer Energieeinsatz für den Aktuator 15 genügt, um die Abhubbewegung des Ventilrings 69 zu erreichen. In diesem Beispiel wirkt die Magnetkraft der Magnetspule 17 auf den Ventilring 69. Durch eine geschickte Bemessung der Federkräfte und der Magnetkräfte kann eine strikte Trennung zwischen einem Notbetriebzustand und einem Normalbetriebzustand erreicht werden. Damit ist der Strömungsweg zwischen dem Rückraum 59 und dem kolbenstangenfernen Arbeitsraum 11 über das Notbetriebventil 67 beeinflussbar.

In der Verbindungshülse 66 der Dämpfventileinrichtung 1 ist mindestens eine Anschlussöffnung 75 ausgeführt, die vom kolbenstangenseitigen Arbeitsraum 9 zur druckbeaufschlagten Fläche A_{ÖZ} an der Unterseite des radialen Absatzes und zum Steuerraum 57 führt. Dazu verfügt der Hauptstufenventilkörper über mindestens eine axiale Öffnung 77 im Bereich des radialen Absatzes 43.

Damit das Dämpfmedium bei einer Anstömung über die Anschlussöffnung 75 nicht durch die Zuströmkanäle 61; 63 im Ventilkörper 35 in Richtung des kolbenstangenfernen Arbeitsraums 11 entweicht, sind die Zuströmkanäle 61; 63 durch Rückschlagventile 79; 81 gesichert. Dabei ist das Rückschlagventil 81 über den Zuströmkanal 63 an den Rückraum 59 angeschlossen ist, der Teil des zweiten Zuströmkanals ist. Bei einem Dämpfmediumstrom aus dem Rückraum 59 in Richtung der zusätzlichen Fläche A_{SchließD2} gibt das Rückschlagventil 81 den Strömungsweg frei.

Es sind vier grundlegende Betriebszustände zu betrachten. Ein erster Betriebszustand der Dämpfventileinrichtung 1 ist gekennzeichnet durch eine Anströmung ausgehend vom kolbenstangenfernen Arbeitsraum 11 über eine Durchgangsöffnung 83 auf den Ventilring 47 und den Ventilkörper 35. Das Notbetriebventil 67 ist eingeschaltet, d. h. wie in der dargestellten Position von seiner Notbetriebventilsitzfläche 73 abgehoben und der Aktuator 15 wirkt der Kraft der Ventilfeder 25; 27 entgegen. Das Dämpfmedium gelangt über den ersten Zuströmkanal 61 im Ventilkörper 35 und das geöffnete Rückschlagventil 79 und weiter durch den Dämpfmediumströmungsweg 55 zur zusätzlichen Ventilschließfläche A_{SchließD2}. Der Druck auf diese Ventilschließfläche A_{SchließD2} übt eine erste Schließkraftkomponente aus. Des Weiteren gelangt Dämpfmedium durch die Strömungsanbindung 65 in der Verbindungshülse 66 und durch das geöffnete Notbetriebventil 67 in den Rückraum 59 und weiter durch das geöffnete Rückschlagventil 81 zur zusätzlichen druckbeaufschlagten Fläche A_{Schließ2D}. Wie bereits beschrieben stellt die Rückseite 41 des Ventilkörpers 35 die druckbeaufschlagte Fläche A_{SchließD} dar. Die auf den Ventilkörper 35 wirksame Schließkraft setzt sich aus der resultierenden Schließkraft, die über den Vorstufenventilkörper direkt auf die Rückseite 41 des Ventilkörpers 35 einwirkt und den Druckkräfte auf den Flächen A_{SchließD} und A_{SchließD2} zusammen. Aufgrund der vergleichsweise geringen Drosselverluste sind die Druckniveaus an den Flächen A_{SchließD} und A_{SchließD2} ähnlich wie im kolbenstangenfernen Arbeitsraum, u. a. deshalb, weil der Dämpfmediumströmungsweg zur zusätzlichen Fläche A_{SchließD2} in Strömungsrichtung bezogen auf die zusätzliche Fläche A_{SchließD2} eine Abflussdrossel 85 aufweist. Eine Fläche A_{ÖD} am Ventilring 47 ist geringfügig größer, als die Summe der Flächen A_{SchließD} und A_{SchließD2}, so dass eine Blockierung der Abhubbewegung des Ventilkörpers 35 aufgrund der Druckverhältnisse ausgeschlossen ist. Der Druck im Steuerraum 57 des Hauptstufenventilkörpers spielt bei dieser Anströmungsrichtung der Dämpfventileinrichtung keine Rolle, da das Vorstufenventil durch die Strömungsanbindung 65 zum Rückraum 59 überbrückt ist.

Ein zweiter Betriebszustand beschreibt den Notbetriebzustand der Dämpfventileinrichtung 1 und einer Anströmung der Dämpfventileinrichtung 1 ausgehend von der Durchgangsöffnung 83. Das Notbetriebventil 67 ist aufgrund fehlender Energiezufuhr über den Aktuator 15 geschlossen. Der Vorstufenventilkörper 22 ist axial geringfügig innerhalb des Vorstufenventilkörpers 21 verschieblich geführt. Im stromlosen Zustand der Magnetspule 17 halten die Ventilfedern 25; 27 den Vorstufenventilkörper 21 statisch betrachtet, d. h. ohne hydraulische Anströmung, in einem maximalen Abstand zur Vorstufenventilsitzfläche 29. Der Vorstufenventilkörper 22 kann deshalb schon bei der geringsten Druckbeaufschlagung ausgehend vom Steuerraum 57 eine maximale Abhubposition einnehmen. Das Ventil 23 ist je nach Abstimmung der Ventilfeder 25; 27 geschlossen oder geringfügig geöffnet. Das Dämpfmedium gelangt wie im Normalbetriebzustand über den Zuströmkanal 61 im Ventilkörper 35 und das geöffnete Rückschlagventil 79 zu der zusätzlichen druckbeaufschlagten Fläche A_{SchließD2}. Damit der Ventilkörper 35 zusammen mit dem Ventilring 47 von der gehäuseseitigen Ventilsitzfläche 49 unabhängig von der Schaltstellung des Notbetriebventils 67 abheben kann, öffnet das Rückschlagventil 81 im Ventilkörper 35, so dass aus dem Rückraum 59 verdrängtes Dämpfmedium über den Zuströmkanal 63 im Ventilkörper 35 in Richtung der zusätzlichen druckbeaufschlagten Fläche A_{SchließD2} abfließen kann.

Der dritte Betriebszustand bezieht sich auf eine Anströmung der Dämpfventileinrichtung 1 ausgehend vom kolbenstangenseitigen Arbeitsraum 9 und geöffnetem Notbetriebventil 67. Das Dämpfmedium gelangt durch die Anschlussöffnung 75 in der Verbindungshülse 66 zur druckbeaufschlagten Fläche A_{ÖZ} am radialen Absatz 43 und weiter zur nun funktional eine Schließfläche A_{Schließz} bildende druckbeaufschlagten Fläche. Die druckbeaufschlagte Fläche am radialen Absatz des Hauptstufenventilkörpers ist für beide Anströmrichtungen der Dämpfventileinrichtung wirksam. In Abhängigkeit der Energieversorgung des Aktuators 15 stellt sich eine Vorstufenventilposition ein, über die wiederum ein Steuerdruck im Steuerraum 57 und damit auch an der druckbeaufschlagten Fläche A_{SchließZ} ansteuerbar ist. Der auf eine ringförmige Fläche A_{ÖZ} wirksame Druck wirkt dem in Schließrichtung wirksamen Druck auf die Fläche A_{SchließZ} entgegen. Wegen der Ablaufdrossel 85, die nun als Zulaufdrossel fungiert, liegt bei geöffneten Vorstufenventil 23 ein Druckgefälle zwischen den Drücken an den Flächen Aöz und A_{SchließZ} vor, so dass die hydraulische Öffnungskraft am Ventilkörper 35 stets etwas größer ist als die hydraulische Schließkraft. Der Druck in der Anschlussöffnung 75 wirkt auch auf den Ventilring 47, der damit auf die gehäuseseitige Ventilsitzfläche 49 gedrückt wird. Deshalb hebt der Ventilkörper 35 von der Ventilsitzfläche 45 des Ventilrings 47 ab.

Das aus dem Steuerraum 57 durch das Vorstufenventil 23 abfließende Dämpfmedium gelangt in den Rückraum 59 und durch das geöffnete Notbetriebventil 67 und die Strömungsverbindung 65 in der Verbindungshülse 66 in den kolbenstangenfernen Arbeitsraum 11. Folglich weist der Rückraum 59 einen Zulauf und Ablauf mit dem Arbeitsraum 11 des Schwingungsdämpfers auf.

Beim vierten Betriebszustand erfolgt die Zuströmung wiederum über die Anschlussöffnung 75 in der Verbindungshülse 66, jedoch ist das Notbetriebventil 67 geschlossen. Der Strömungsweg zum Vorstufenventil 23 entspricht dem Beschriebenen zum dritten Betriebszustand. Abweichend ist das Vorstufenventil 23 aufgrund der fehlenden Stromversorgung des Aktuators 15 maximal geöffnet. Eine Schließfeder 86 sorgt für ein Aufsitzen des Hauptstufenventilkörpers 35 zusammen mit dem Ventilring 47 auf der gehäuseseitigen Ventilsitzfläche 49. Damit wird ein hydraulischer Kurzschluss zwischen den Arbeitsräumen über die Anschlussöffnung 75 verhindert. Das Dämpfmedium gelangt in den Rückraum 59, dessen Abfluss über das geschlossene Notbetriebventil 67 blockiert ist. In dem Ventilring 69 des Notbetriebsventils 67 ist ein Strömungspfad 87 zu einem Druckbegrenzungsventil 89 ausgeführt, über das ein definiertes Druckniveau im Rückraum 59 bestimmt werden kann. Das Druckniveau im Rückraum 59 und damit auf die Rückseite 41 des Ventilkörpers 35 und auf die druckbeaufschlagte Fläche am radialen Absatz A_{SchließZ} bestimmt die Schließkraft im Notbetrieb der Dämpfventileinrichtung 1. Der Vergleich des zweiten mit dem vierten Betriebszustand verdeutlicht, dass das Notbetriebventil nur bei einer Anströmungsrichtung der Dämpfventileinrichtung 1 über die Anschlussöffnung 75 wirksam ist. Versuche haben gezeigt, dass diese Auslegung der Dämpfventileinrichtung 1 für ein sicheres Betriebsverhalten eines Schwingungsdämpfers geeignet ist.

Die Dämpfventileinrichtung umfasst des Weiteren ein erstes und ein zweites druckabhängiges Zusatzventil 91; 93, die dem verstellbaren Dämpfventil 37 in Reihe zugeordnet sind. Die Zusatzventilkombination ist innerhalb eines Rohrgehäuses 95 angeordnet, das an dem äußeren Ventilgehäuse 13 montierbar ist.

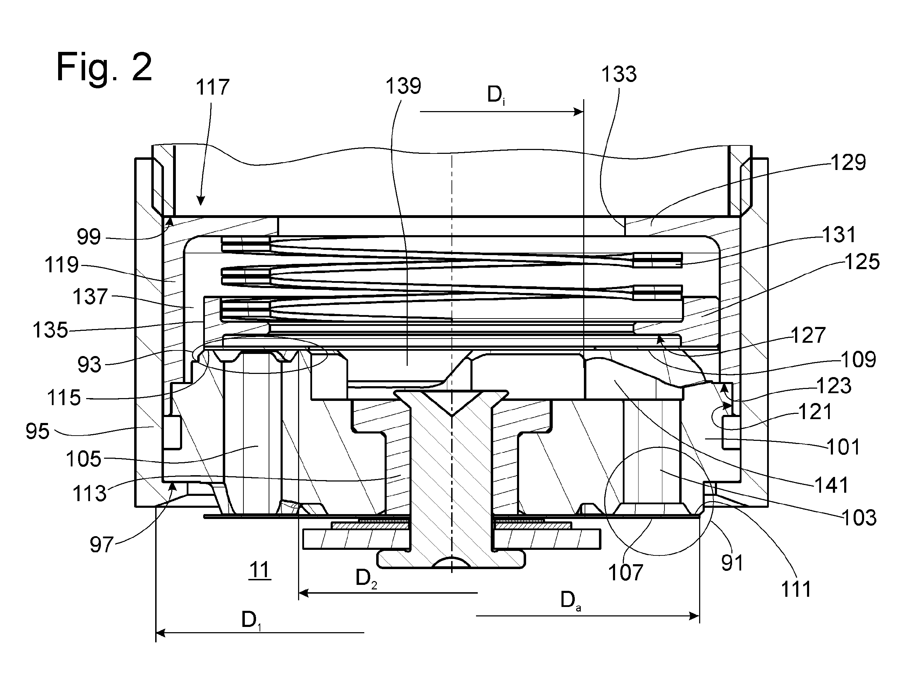

Die Figur 2 beschränkt sich auf die Darstellung des Rohrgehäuses 95 mit den Zusatzventilen 91; 93. In dem Rohrgehäuse 95 ist zwischen einer radialen Auflagefläche 97 des Rohrgehäuses 95 und einer Stirnfläche 99 des äußeren Gehäuses 13 ein Zusatzdämpfventilkörper 101 axial fixiert. Der Zusatzdämpfventilkörper 101 verfügt für jedes Zusatzventil 91; 93 über mindestens einen separaten Durchtrittskanal 103; 105, dessen Austrittsseite von mindestens einer Ventilscheibe 107; 109 zumindest teilweise abgedeckt wird.

Auf einer in Richtung des kolbenstangenfernen Arbeitsraums 11 weisenden Ventilsitzfläche 111 ist die mindestens eine Ventilscheibe 107 des ersten Zusatzventils 91 mittels eines Befestigungsbolzens 113 fixiert, der die Ventilscheibe 107 am Innendurchmesser zentriert. Der Befestigungsbolzen 113 kann z.B. als Niet oder auch als Schraube ausgeführt sein.

Auf einer in Richtung des verstellbaren Hauptstufenventils 37, Fig. 1, weisenden Ventilsitzfläche 115 ist die mindestens eine Ventilscheibe 109 des zweiten Zusatzventils 93 angeordnet, die an ihrem Außendurchmesser zum Zusatzdämpfventilkörper 101 zentriert ist. Dazu dient ein Ringdeckel 117, der einen umlaufenden Steg 119 aufweist, der mit einer äußeren Mantelfläche 121 des Zusatzdämpfventilkörpers 101 eine Presspassung bildet. Ein Absatz des Zusatzdämpfventilkörpers 101 dient als axiale Abstützfläche 123 für den Ringdeckel 117.

Auf der mindestens einen Ventilscheibe 109 des zweiten Zusatzventils 93 ist im Bereich des Außendurchmessers ein Winkelring 125 angeordnet. Der Winkelring 125 verfügt nach radial innen über eine Abstützfläche 127 für die Ventilscheibe(n) 109. Zwischen einem Deckelrand 129 und dem Winkelring 125 ist mindestens eine Ventilfeder 131 des zweiten Zusatzventils 93 verspannt. In diesem Fall kommt ein Paket von mehreren Scheibenfedern zur Anwendung. Somit sind die Ventilscheiben 107; 109 des ersten und zweiten Zusatzventils 91; 93 separat fixiert. Dadurch liegt radial innerhalb einer Deckelöffnung ein freier Strömungsweg für die beiden Zusatzventile 91; 93 vor. Außenseitig verfügt der Winkelring 125 über mindestens eine Abflachung 135, die mit dem Steg 119 des Ringdeckels 117 eine Strömungspassage 137 bildet.

Im Rahmen der Montage wird der Zusatzdämpfventilkörper 101 mit der mindestens einen Ventilscheibe 107 des ersten Zusatzventils 91 bestückt und der Befestigungsbolzen 113 fixiert. Danach wird die mindestens eine Ventilscheibe 109 des zweiten Zusatzventils 93 auf die Ventilsitzfläche 115 aufgelegt, der Winkelring 125 mit der Ventilfeder 131 montiert und über den Ringdeckel 117 positioniert. Wie bereits ausgeführt, hält eine Presspassung den Ringdeckel 117 und den Zusatzdämpfventilkörper 101 zusammen. Diese Baueinheit kann vor der Montage in die Dämpfventileinrichtung 1 auf ihre korrekte Funktion überprüft werden. Abschließend wird die Baueinheit über das Rohrgehäuse 95 am äußeren Ventilgehäuse 13 fixiert.

Bei einer Anströmung ausgehend vom kolbenstangenfernen Arbeitsraum 11 in Richtung des verstellbaren Hauptstufenventils 37 gelangt das Dämpfmedium von einem größeren Eintrittsdurchmessser D₁ über den mindestens einen Durchtrittskanal 105 auf einen kleineren Austrittsdurchmessser D₂. Bei einem kleineren Öffnungsdruck auf die Ventilscheibe 109 des zweiten Zusatzventils 93 hebt die mindestens eine Ventilscheibe 109 zuerst am Innendurchmesser ab. Bei einem größeren Öffnungsdruck kann die gesamte Ventilscheibe 109 gegen die Kraft der Ventilfedern 131 von der Ventilsitzfläche 115 abheben. Dann kann auch ein Teil des Dämpfmediums über die Strömungspassage 137 fließen. Die Abstützfläche 127 beschränkt dabei die Schirmung der mindestens einen Ventilscheibe 109. Nach radial innen steht ein großer Mittenanströmbereich 139 als Strömungskanal zur Verfügung, der direkt auf das Hauptstufenventil 37 führt. Zwischen der Austrittsseite des zweiten Zusatzventils 93 und dem Hauptstufenventil 37 befindet sich praktisch kein Strömungswiderstand mehr.

Bei einer Anströmung des Hauptstufenventils über die Anschlussöffnung 75, s. Fig. 1, gelangt das aus dem Hauptstufenventil 37 austretenden Dämpfmedium über den offenen Ringdeckel 117 in den Mittenanströmbereich 139, an dem mindestens ein Radialabschnitt 141 des mindestens einen Durchtrittskanals 103 des ersten Zusatzventils 91 angeschlossen ist. Der Eintrittsdurchmesser Dᵢ in den mindestens einen Durchtrittskanal 103 ist kleiner als der Austrittsdurchmesser Dₐ, wobei die Ventilscheibe 107 eine randseitige Abhubbewegung ausführt.

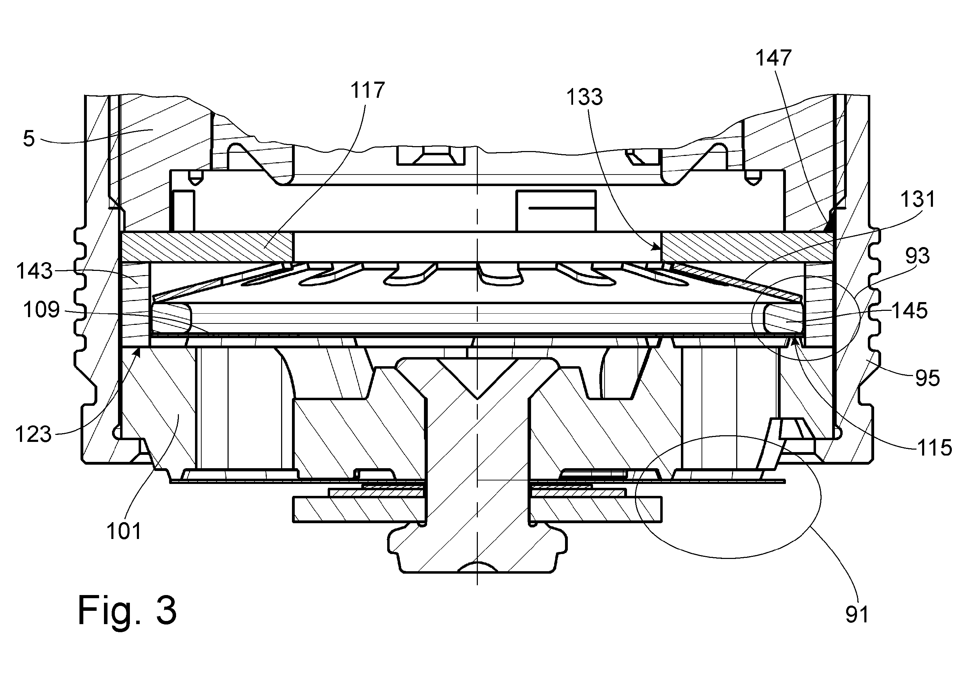

Die Fig. 3 beschränkt sich auf die Darstellung der beiden Zusatzventile innerhalb des Rohrgehäuses 95. Der Aufbau und die Funktionsweise des Vorstufenventils 23 und des Hauptstufenventils 37 können mit der Beschreibung gemäß Fig. 1 übereinstimmen, es ist jedoch nicht Voraussetzung für die Funktion der beiden Zusatzventile 91; 93.

Die konstruktive Ausgestaltung des ersten Zusatzventils 91 ist identisch mit der Darstellung gemäß Fig. 2, so dass auf eine eingehende Beschreibung verzichtet werden kann. Auf der Ventilsitzfläche 115 des zweiten Zusatzventils 93 am Zusatzventilkörper 101 liegt die mindestens eine Ventilscheibe 109 auf, die sich an einem Zentrierring 143 radial abstützt. Der Zentrierring 143 stellt ein zum Rohrgehäuse 95 separates hülsenförmiges Bauteil mit konstanter Wandstärke dar, das auf der Abstützfläche 123 axial positioniert ist.

Auf der Ventilscheibe 109 liegt ein Zwischenring 145, der sich ebenfalls am Zentrierring radial abstützt. Die mindestens eine Ventilfeder 131 liegt mit ihrem Außendurchmesser auf dem Zwischenring 145 auf. Am Innendurchmesser liegt die Ventilscheibe 109 am Ringdeckel 117 an, der als plane Scheibe ausgeführt ist und sich direkt am Innendurchmesser des Rohrkörpers 95 zentriert.

Die die Zusatzventile 91 und 93 bildenden Bauteile sind im Rohrkörper 95 direkt montierbar. Praktisch stellt der Rohrkörper 95 die Montagevorrichtung dar, so dass über eine Fixierung des Ringdeckels 117 eine in sich abgeschlossene Baueinheit möglich ist. Bei der Ausgestaltung des Ringdeckels besteht z. B. die Möglichkeit, den Ringdeckel am Außendurchmesser mit einem gewissen Übermaß zum Innendurchmesser des Rohrkörpers 95 auszuführen, um eine Presspassung zu erreichen. Alternativ kann man jedoch auch vorsehen, dass an der Innenwandung des Rohrkörpers 95 am Innenumfang verteilt mehrere Verstemmungen 147 auf den Ringdeckel 117 ausgeführt sind. Eine Verstemmung besteht aus einer kleinen Volumenverschiebung aus dem Wandungsbereich des Rohrkörpers 95 und kann z. B. mit einem einfachen Meißelwerkzeug vorgenommen werden. Wenn der Rohrkörper 95 am Kolben 5 befestigt ist (s. Fig. 1), dann ist die Baueinheit unabhängig von der Fixierung des Ringdeckels 117 gesichert.

Im Vergleich zur Ausführung nach Fig.2 sind einige Vorteile nutzbar. So bietet der Zwischenring 145 die Möglichkeit durch eine Änderung des Innendurchmessers den Krafteinleitungspunkt der Ventilfeder 131 auf die Ventilscheibe 109 zu verändern. Des Weiteren kann durch die Höhe des Zwischenrings 145 der Einbauraum und damit die Vorspannung der mindestens einen Ventilfeder 131 variabel unter Verwendung eines standardisierten Zentrierrings 143 und/oder Ventilfeder 131 gestaltet werden.

Zusätzlich wird aufgrund der am Innendurchmesser abhebenden Ventilscheibe und der nach innen weisenden trichterförmigen Einbaulage der Ventilfeder eine wirksame Strömungslenkung in Richtung der Deckelöffnung 133 und damit zum Hauptstufenventil 37 erzielt.

**Bezugszeichen**

| | |
|---|---|
| 1 | Dämpfventileinrichtung |
| 3 | Kolbenstange |
| 5 | Kolben |
| 7 | Zylinder |
| 9 | kolbenstangenseitiger Arbeitsraum |
| 11 | kolbenstangenferner Arbeitsraum |
| 13 | äußeres Gehäuse |
| 15 | Aktuator |
| 17 | Magnetspule |
| 19 | Anker |
| 21 | Vorstufenventilkörper |
| 22 | Vorstufenventilkörper |
| 23 | Vorstufenventil |
| 25, 27 | Ventilfeder |
| 29 | Vorstufenventilfläche |
| 31 | inneres Gehäuse |
| 33 | Stufenöffnung |
| 35 | Ventilkörper |
| 37 | Hauptstufenventil |
| 39 | Führungshülse |
| 41 | Rückseite |
| 43 | radialer Absatz |
| 45 | Ventilsitzfläche |
| 47 | Ventilring |
| 49 | gehäuseseitige Ventilsitzfläche |
| 51 | äußerer Topf |
| 53 | innere Scheibe |
| 55 | Dämpfmediumströmung |
| 57 | Steuerraum |
| 59 | Rückraum |
| 61 | erster Zuströmkanal |
| 63 | zweiter Zuströmkanal |
| 65 | Strömungsanbindung |
| 66 | Verbindungshülse |
| 67 | Notbetriebsventil |
| 69 | Ventilring |
| 71 | Schließfeder |
| 73 | Notbetriebsventilsitzfläche |
| 75 | Anschlussöffnung |
| 77 | axiale Öffnung |
| 79,81 | Rückschlagventil |
| 83 | Durchgangsöffnung |
| 85 | Abflussdrossel |
| 86 | Schließfeder |
| 87 | Strömungspfad |
| 89 | Druckbegrenzungsventile |
| 91 | erstes Zusatzventil |
| 93 | zweites Zusatzventil |
| 95 | Rohrgehäuse |
| 97 | radiale Auflagefläche |
| 99 | Stirnfläche |
| 101 | Zusatzdämpfventilkörper |
| 103 | Durchtrittskanal |
| 105 | Durchtrittskanal |
| 107 | Ventilscheibe |
| 109 | Ventilscheibe |
| 111 | Ventilsitzfläche |
| 113 | Befestigungsbolzen |
| 115 | Ventilsitzfläche |
| 117 | Ringdeckel |
| 119 | Steg |
| 121 | Mantelfläche |
| 123 | Abstützfläche |
| 125 | Winkelring |
| 127 | Abstützfläche |
| 129 | Deckelrand |
| 131 | Ventilfeder |
| 133 | Deckelöffnung |
| 135 | Abflachung |
| 137 | Strömungspassage |
| 139 | Mittenanströmbereich |
| 141 | Radialabschnitt |
| 143 | Zentrierring |
| 145 | Zwischenring |
| 147 | Verstemmung |

## Patentansprüche

1. Verstellbare Dämpfventileinrichtung (1), umfassend ein verstellbares Dämpfventil (37), das in zwei Richtungen durchströmbar ist, wobei dem verstellbaren Dämpfventil (37) für jeweils eine Durchströmungsrichtung ein druckabhängiges Zusatzventil (91; 93) in Reihe zugeordnet ist, wobei jedes Zusatzventil (91; 93) mindestens einen separaten Durchtrittskanal (103; 105) aufweist, dessen Austrittsseite von mindestens einer Ventilscheibe (107; 109) zumindest teilweise abgedeckt wird, **dadurch gekennzeichnet, dass** der Strömungsweg in Strömungsrichtung ausgehend vom verstellbaren Dämpfventil (37) durch das erste Zusatzventil (91) von einem kleineren Eintrittsdurchmesser (Dᵢ) auf einen größeren Austrittsdurchmesser (Dₐ) ausgeführt ist und die mindestens eine Ventilscheibe (107) eine randseitige Abhubbewegung ausführt, wobei der Strömungsweg durch das zweite Zusatzventil (93) in Strömungsrichtung zum verstellbaren Dämpfventil (37) von einem größeren Eintrittsdurchmesser (D₁) auf einen kleineren Austrittsdurchmesser (D₂) ausgeführt ist.

2. Verstellbare Dämpfventileinrichtung nach Anspruch 1, **dadurch gekennzeichnet, dass** die mindestens eine Ventilscheibe (109) des zweiten Zusatzventils (93) an ihrem Außendurchmesser zum Zusatzdämpfventilkörper (101) zentriert ist.

3. Verstellbare Dämpfventileinrichtung nach Anspruch 1, **dadurch gekennzeichnet, dass** die mindestens eine Ventilscheibe (107) des ersten Zusatzventils (91) an ihrem Innendurchmesser zentriert ist.

4. Verstellbare Dämpfventileinrichtung nach Anspruch 1, **dadurch gekennzeichnet, dass** die Ventilscheiben (107; 109) des ersten und des zweiten Ventils (91; 93) separat fixiert sind.

5. Verstellbare Dämpfventileinrichtung nach Anspruch 1, **dadurch gekennzeichnet, dass** der mindestens eine Durchtrittskanal (103) des ersten Zusatzventils (91) einen Radialabschnitt (141) aufweist, der an einen Mittenanströmbereich (139) angeschlossen ist.

6. Verstellbare Dämpfventileinrichtung nach Anspruch 1, **dadurch gekennzeichnet, dass** das zweite Zusatzventil (93) einen Ringdeckel (117) aufweist, an dem sich mindestens eine Ventilfeder (131) abstützt, die auf die mindestens eine Ventilscheibe (109) des zweiten Ventils (93) eine Vorspannkraft ausübt.

7. Verstellbare Dämpfventileinrichtung nach Anspruch 6, **dadurch gekennzeichnet, dass** der mindestens einen Ventilscheibe (109) des zweitens Ventils (93) ein Winkelring (125) beigeordnet ist, der eine Abstützfläche (127) für die mindestens eine Ventilscheibe (109) aufweist.

8. Verstellbare Dämpfventileinrichtung nach Anspruch 7, **dadurch gekennzeichnet, dass** der Winkelring (125) radial von einem Steg (119) des Ringdeckels (117) zentriert wird.

9. Verstellbare Dämpfventileinrichtung nach Anspruch 7, **dadurch gekennzeichnet, dass** der Winkelring (125) im Bereich des Außendurchmesser der mindestens einen Ventilscheibe (109) auf dieser aufliegt.

10. Verstellbare Dämpfventileinrichtung nach Anspruch 1, **dadurch gekennzeichnet, dass** der Ringdeckel (117) mit dem Zusatzdämpfventilkörper (101) eine Presspassung bildet.
